(19) Europäisches Patentamt
European Patent Office
Office européen des brevets

(11) EP 2 963 552 B1

(12) # EUROPEAN PATENT SPECIFICATION

(45) Date of publication and mention of the grant of the patent:
**24.03.2021 Bulletin 2021/12**

(21) Application number: **14756415.7**

(22) Date of filing: **24.02.2014**

(51) Int Cl.:
***G06F 11/34*** *(2006.01)* ***G05B 23/02*** *(2006.01)*

(86) International application number:
**PCT/JP2014/000949**

(87) International publication number:
**WO 2014/132611 (04.09.2014 Gazette 2014/36)**

(54) **SYSTEM ANALYSIS DEVICE AND SYSTEM ANALYSIS METHOD**

SYSTEMANALYSEVORRICHTUNG UND SYSTEMANALYSEVERFAHREN

DISPOSITIF ET PROCÉDÉ D'ANALYSE DE SYSTÈMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2013 JP 2013035784**

(43) Date of publication of application:
**06.01.2016 Bulletin 2016/01**

(73) Proprietor: **NEC Corporation**
**Tokyo 108-8001 (JP)**

(72) Inventor: **NATSUMEDA, Masanao**
**Tokyo 108-8001 (JP)**

(74) Representative: **Betten & Resch**
**Patent- und Rechtsanwälte PartGmbB**
**Maximiliansplatz 14**
**80333 München (DE)**

(56) References cited:
**WO-A1-2013/111560 JP-A- 2006 135 412**
**JP-A- 2006 135 412 JP-A- 2012 242 159**
**US-A1- 2010 050 023 US-A1- 2012 254 414**

- **JAN HAUKE ET AL: "Comparison of Values of Pearson's and Spearman's Correlation Coefficients on the Same Sets of Data", QUAESTIONES GEOGRAPHICAE, vol. 30, no. 2, 1 January 2011 (2011-01-01), XP055192851, ISSN: 0137-477X, DOI: 10.2478/v10117-011-0021-1**
- **YUJI IZUMI ET AL.: 'A Network-Status Evaluation Method Using Occurence Probability Matrices of Correlation Coefficients' THE TRANSACTIONS OF THE INSTITUTE OF ELECTRONICS, INFORMATION AND COMMUNICATION ENGINEERS vol. J90-B, no. 7, 01 July 2007, pages 660 - 669**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 963 552 B1

## Description

[Technical Field]

The present invention relates to a system analysis device and a system analysis method.

[Background Art]

An example of an operation management system which models a system by using time-series information about system performance and determines a cause of failure, abnormality, or the like of the system by using the generated model is described in PTL 1.

The operation management system described in PTL1 generates a correlation model of the system by determining correlation functions expressing correlations between each pair in a plurality of metrics on the basis of measurements of the plurality of metrics of the system. Then, the operation management system detects destruction of correlations (correlation destruction) by using the generated correlation model to determine a failure cause of the system on the basis of the detected correlation destruction. This technology for analyzing a state of a system on the basis of correlation destruction is called invariant relation analysis.

As a related technology, a method for, when there is a change in a physical quantity of each of a plurality of points in a process from a reference point, determining a failure point on the basis of correlations between points, is disclosed in PTL 2.

[PTL3] US 2010/050023 A1 discloses embodiments which can significantly optimize a root cause analysis and substantially reduce the overall time needed to isolate the root cause or causes of service degradation in an IT environment. By building on the ability of an abnormality detection algorithm to correlate an alarm with one or more events, embodiments disclosed herein can apply data correlation to data points collected within a specified time window by data metrics involved in the generation of the alarm and the event(s). The level of correlation between the primary metric and the probable cause metrics may be adjusted using the ratio between theoretical data points and actual points. The final Root Cause Analysis score may be modified depending upon the adjusted correlation value and presented for user review through a user interface.

[PTL4] US 2012/254414 A1 discloses a computer implemented method, computer program product, and computer system for identifying a service metric associated with a service, identifying one or more abnormalities of one or more infrastructure metrics that occur within a time window around an abnormality of the service metric, determining a set of candidate infrastructure metrics for the service metric based on how many times an abnormality of an infrastructure metric occurred within a time window around an abnormality of the service metric, determining a degree of lag correlation for each candidate infrastructure metric with respect to the service metric, selecting one or more candidate infrastructure metrics having a degree of lag correlation that exceeds a threshold to be a leading indicator infrastructure metric for the service metric, and providing a performance degradation warning for the service when an abnormality of one of the leading indicator infrastructure metrics is detected.

[PTL5] JP 2006 135412 A discloses a remote supervisory system with high detection sensitivity which early and accurately detects a fault of a supervisory object facility.

[Summary of Invention]

[Technical Problem]

According to the invariant relation analysis of PTL1, metrics causing abnormality (abnormality cause metrics) are narrowed with reference to a state of correlation destruction occurring in a correlation model. When a large number of correlations associated with the abnormality cause metric are destructed, it is possible to narrow down to the metric as an abnormality cause. However, when only a small number of correlations associated with the abnormality cause metric are destructed, it may not be possible to narrow down to the metric as an abnormality cause.

Fig. 9 is a diagram illustrating an example of determination of an abnormality cause in the invariant relation analysis of PTL1. In Fig. 9, each of the nodes indicates a metric, while each of the arrows illustrated between the respective metrics indicates a correlation. The node illustrated in a thick line indicates a metric causing abnormality (abnormality cause metric), while a thick line arrow indicates a correlation for which correlation destruction is detected.

In Fig. 9, correlation destruction is detected in one correlation (between metrics A and C) as a result of abnormality of the metric A. In this case, it cannot be decided which metric corresponds to an abnormality cause in the metrics A and C associated with the correlation for which the correlation destruction is detected. For overcoming this problem, for example, a method for determining an abnormality cause metric, on the basis of a ratio of the number of correlations for which correlation destruction is detected to the total number of correlations (hereinafter referred to as correlation destruction ratio) for each metric, is used. According to this method, however, a ratio 1/2 indicating correlation destruction associated with the metric C is larger than a ratio 1/3 indicating correlation destruction associated with the metric A, wherefore the metric C is erroneously determined as the abnormality cause.

An object of the present invention is to solve the aforementioned problem, and to provide a system analysis device and a system analysis method, which are capable of accurately determining an abnormality cause in invariant relation analysis.

[Solution to Problem]

A system analysis device according to the claims.

A system analysis method according to the claims.

A computer readable storage medium according to the claims.

[Advantageous Effects of Invention]

An advantageous effect of the present invention is that it is possible to accurately determine an abnormality cause in invariant relation analysis.

[Brief Description of Drawings]

Fig. 1 is a block diagram illustrating a characteristic configuration according to a first exemplary embodiment of the present invention.

Fig. 2 is a block diagram illustrating a configuration of a system analysis device 100 according to the first exemplary embodiment of the present invention.

Fig. 3 is a flowchart illustrating an operation of the system analysis device 100 according to the first exemplary embodiment of the present invention.

Fig. 4 is a diagram illustrating an example of a correlation model 122 and detection sensitivities according to the first exemplary embodiment of the present invention.

Fig. 5 is a diagram illustrating an example of detection of correlation destruction and an example of comparison of detection sensitivities according to the first exemplary embodiment of the present invention.

Fig. 6 is a flowchart illustrating an operation of the system analysis device 100 according to a second exemplary embodiment of the present invention.

Fig. 7 is a diagram illustrating an example of the correlation model 122 and detection sensitivities according to the second exemplary embodiment of the present invention.

Fig. 8 is a diagram illustrating an example of detection of correlation destruction and an example of comparison of detection sensitivities according to the second exemplary embodiment of the present invention.

Fig. 9 is a diagram illustrating an example of determining an abnormality cause according to invariant relation analysis in PTL1.

[Description of Embodiments]

The following exemplary embodiment is described with an example of invariant relation analysis in an IT (Information Technology) system.

(First Exemplary Embodiment)

A first exemplary embodiment of the present invention is hereinafter described.

First, a configuration according to the first exemplary embodiment of the present invention is described. Fig. 2 is a block diagram illustrating a configuration of a system analysis device 100 according to the first exemplary embodiment of the present invention.

Referring to Fig. 2, the system analysis device 100 according to the first exemplary embodiment of the present invention is connected with a monitored system including one or more monitored devices 200. Each of the monitored devices 200 is a device, such as a server device and a network device of various types, constituting an IT system.

The monitored device 200 obtains measurement data (measurements) about performance values of the monitored device 200 for a plurality of items at regular intervals, and transmits the obtained data to the system analysis device 100. The items of the performance values include, for example, use rates and use volumes of computer resources and network resources, such as a CPU (Central Processing Unit) use rate, a memory use rate, and a disk access frequency.

It is assumed herein that a set of the monitored device 200 and a performance value item is defined as a metric (performance index), and that a set of a plurality of metrics measured at an identical time is defined as performance information. Each metric is expressed in a numerical value such as an integer and a decimal. Each metric corresponds to an "element" for which a correlation model is generated in PTL1.

The system analysis device 100 generates a correlation model 122 of the monitored devices 200 on the basis of performance information collected from the monitored devices 200, and analyzes a state of the monitored devices 200 by using the generated correlation model 122.

The system analysis device 100 includes a performance information collection unit 101, a correlation model generation unit 102, a correlation destruction detection unit 103, an abnormality cause extraction unit 104, a performance information storage unit 111, a correlation model storage unit 112, a correlation destruction storage unit 113, and a detection sensitivity storage unit 114.

The performance information collection unit 101 collects performance information from the monitored devices 200.

The performance information storage unit 111 stores a time-series change of the performance information collected by the performance information collection unit 101 as performance series information.

The correlation model generation unit 102 generates the correlation model 122 of the monitored system on the basis of the performance series information.

The correlation model 122 includes correlation functions (or prediction expressions) expressing correlations of respective pairs of metrics. Each of the correlation functions is a function for predicting one of values of a pair of metrics based on time series of both of the pair, or time series of the other of the pair. Hereinafter, a metric in a pair of metrics predicted based on the correlation function is referred to as an objective metric, while the other metric in the pair of metrics is referred to as a non-objective metric.

The correlation model generation unit 102 determines a correlation function f(y, u) for a pair of metrics y(t) and u(t) by using Equation 1 (Math 1) in system identification processing executed for performance information in a predetermined modeling period, similarly to the operation management device in PTL1. In this case, the metrics y(t) and u(t) correspond to an objective metric and a non-objective metric, respectively. Values $a_n$ (n = 1 through N) and $b_m$ (m = 0 through M) are coefficients to be multiplied by y(t-n) and u(t-K-m), respectively. The values $a_n$, $b_m$, c, N, K, and M are determined such that a value of prediction accuracy (fitness) of a correlation function expressed in Equation 2 (Math 2) is maximum.

[Math 1]

$$\hat{y}(t) = f(y,u) = a_1 y(t-1) + \ldots + a_N y(t-N) + b_0 u(t-K) + \ldots + b_M u(t-K-M) + c$$

$\hat{y}(t)$: *PREDICTION VALUE OF OBJECTIVE METRIC*
$y(t)$: *MEASUREMENT OF OBJECTIVE METRIC*
$u(t)$: *MEASUREMENT OFNON-OBJECTIVE METRIC*

[Math 2]

$$F = \left[ 1 - \sqrt{\frac{\sum_{t=1}^{N} |y(t) - \hat{y}(t)|^2}{\sum_{t=1}^{N} |y(t) - \bar{y}|^2}} \right]$$

$\bar{y}$ : *A VERAGE OF OBJECTIVE METRIC*

The correlation model generation unit 102 may use a set of correlation functions exhibiting prediction accuracy equal to or greater than a predetermined value, as the correlation model 122.

Fig. 4 is a diagram illustrating an example of the correlation model 122 and detection sensitivities according to the first exemplary embodiment of the present invention. In Fig. 4, the correlation model 122 is illustrated as a graph including nodes and arrows. Each of the nodes indicates a metric, while each of the arrows illustrated between the respective metrics indicates a correlation. A metric illustrated at a destination of each of the arrows corresponds to an objective metric.

In the correlation model 122 of Fig. 4, one metric is present for each of the monitored devices 200 to which device identifiers A through D are given (hereinafter referred to as metrics A through D). A correlation is defined for each of pairs in the metrics A through D. In addition, one correlation function for predicting one of a pair of metrics is defined for the correlation of each pair of metrics.

The correlation model storage unit 112 stores the correlation model 122 generated by the correlation model generation unit 102.

The correlation destruction detection unit 103 detects correlation destruction in a correlation contained in the correlation model 122 for newly input performance information.

The correlation destruction detection unit 103 detects correlation destruction for respective pairs of metrics similarly to the operation management device in PTL1. The correlation destruction detection unit 103 detects correlation destruction of a correlation for a pair when a difference (prediction error) between a measurement of an objective metric and a prediction value of the objective metric obtained by input of a measurement of a metric into the correlation function is equal to or greater than a predetermined threshold.

The correlation destruction storage unit 113 stores correlation destruction information indicating a correlation for which correlation destruction is detected.

Fig. 5 is a diagram illustrating an example of detection of correlation destruction and an example of comparison of detection sensitivities according to the first exemplary embodiment of the present invention. In Fig. 5, a thick line arrow indicates a correlation for which correlation destruction is detected in the correlation model 122 in Fig. 4. In Fig. 5, a node illustrated in a thick line indicates a metric causing abnormality (abnormality cause metric). In the example of Fig. 5, correlation destruction occurs in the correlation between the metric A and the metric C due to abnormality of the monitored device 200 having the device identifier A.

The abnormality cause extraction unit 104 calculates a detection sensitivity of each of correlations included in the correlation model 122. The detection sensitivity indicates a degree of effect on a prediction value imposed by abnormality of a metric associated with a correlation, in other words, a likelihood of occurrence of correlation destruction in the correlation at the time of abnormality of the metric.

A method for calculating a detection sensitivity according to the first exemplary embodiment of the present invention is hereinafter described.

When a correlation is expressed by a correlation function in Equation 1 described above, a prediction error of a prediction value of an objective metric in the correlation function tends to increase in either the positive direction or the negative direction, at the time of a physical failure for either one of a pair of metrics. In this case, the likelihood (detection sensitivity) of correlation destruction in the correlation at the time of abnormality of the metric can be approximated by using the sum of the coefficients of the correlation function expressing the correlation.

In the first exemplary embodiment of the present invention, a detection sensitivity is defined as a value obtained by standardizing a sum of coefficients in a correlation function with a threshold for a prediction error applied for determining correlation destruction..

When the correlation function f(y, u) in Equation 1 is defined for the pair of metrics y and u, for example, the detection sensitivity is calculated as follows. A detection sensitivity $S_y$ to the objective metric y is calculated by dividing the sum of coefficients to be multiplied by the objective metric y in the correlation function f(y, u) by a threshold for a prediction error, as expressed in Equation 3 (Math 3). Further, a detection sensitivity $S_u$ to the non-objective metric u is calculated by dividing the sum of coefficients to be multiplied by the non-objective metric u in the correlation function f(y, u) by the threshold for the prediction error, as expressed in Equation 4 (Math 4).

[Math 3]

$$S_y = \frac{\left|1 + \sum_{i=1}^{N} a_i\right|}{Threshold}$$

[Math 4]

$$S_u = \frac{\left|\sum_{i=0}^{M} b_i\right|}{Threshold}$$

Here "Threshold" is a threshold for a prediction error applied for determining correlation destruction by using the correlation function f(y, u). A value of "Threshold" is determined by the correlation model generation unit 102 on the basis of the maximum value or a standard deviation of a prediction error for performance information during a modelling period, for example. The value of "Threshold" may be determined by an administrator or the like for each correlation function.

The abnormality cause extraction unit 104 further extracts a metric of candidate for abnormality cause, by using detection sensitivities calculated for each of the metrics associated with a correlation for which correlation destruction is detected. Here, the abnormality cause extraction unit 104 uses the detection sensitivities of respective correlations associated with each of the metrics.

The detection sensitivity storage unit 114 stores detection sensitivities calculated by the abnormality cause extraction unit 104.

The system analysis device 100 may be configured by a computer which includes a CPU and a storage medium storing a program, and operates under control of the program. The performance information storage unit 111, the correlation model storage unit 112, the correlation destruction storage unit 113, and the detection sensitivity storage unit 114 may be either separate storage media for each, or configured by a one-piece storage medium.

Next, an operation of the system analysis device 100 according to the first exemplary embodiment of the present invention is described.

Fig. 3 is a flowchart illustrating an operation of the system analysis device 100 according to the first exemplary embodiment of the present invention.

It is assumed herein that the correlation model 122 illustrated in Fig. 4 is generated by the correlation model generation unit 102, and stored in the correlation model storage unit 112. It is further assumed that detection sensitivities illustrated in Fig. 4 is calculated by the abnormality cause extraction unit 104, and stored in the detection sensitivity storage unit 114.

First, the correlation destruction detection unit 103 detects correlation destruction in a correlation included in the correlation model 122, by using performance information newly collected by the performance information collection unit 101 (step S101).

For example, the correlation destruction detection unit 103 detects correlation destruction illustrated in Fig. 5 for performance information newly collected.

The abnormality cause extraction unit 104 selects one of metrics included in the correlation model 122 (step S102).

When correlations associated with the selected metric include a correlation for which correlation destruction is detected (step S103/Y), the abnormality cause extraction unit 104 selects one of correlations associated with the selected metric (step S104). When the selected metric corresponds to the objective metric of the correlation function of the selected correlation (step S105/Y), the abnormality cause extraction unit 104 obtains a detection sensitivity to the objective metric of the correlation function from the detection sensitivity storage unit 114. When the selected metric is not the objective metric of the correlation function of the selected correlation (step S105/N), the abnormality cause extraction unit 104 obtains a detection sensitivity to the non-objective metric of the correlation from the detection sensitivity storage unit 114. The abnormality cause extraction unit 104 repeats the processing from step S104 to step S107 for all the correlations associated with the selected metric (step S108).

When the metric A is selected, for example, the abnormality cause extraction unit 104 obtains a detection sensitivity (=0.01) to the objective metric of a correlation function f(A, B) as illustrated in Fig. 5, in consideration that the metric A is the objective metric of the correlation function f(A, B). Similarly, the abnormality cause extraction unit 104 obtains a detection sensitivity (=0.05) to the objective metric of a correlation function f(A, C), in consideration that the metric A is the objective metric of the correlation function f(A, C). Further, the abnormality cause extraction unit 104 obtains a detection sensitivity (=0.001) to the non-objective metric of a correlation function f(D, A), in consideration that the metric A is the non-objective metric of the correlation function f(D, A).

Next, the abnormality cause extraction unit 104 compares detection sensitivities obtained for the respective correlation functions associated with the selected metric, and determines whether or not correlation destruction is detected for the correlation function exhibiting the highest detection sensitivity (step S109). When correlation destruction is detected for the correlation function exhibiting the highest detection sensitivity in step S109 (step S109/Y), the abnormality cause extraction unit 104 determines the selected metric as a candidate for the abnormality cause.

In the case of the foregoing, for example, the detection sensitivity (=0.05) of the correlation between metrics A and C for which correlation destruction is detected is higher than the detection sensitivity (=0.01) of the correlation between the metrics A and B and the detection sensitivity (=0.001) of the correlation between the metrics A and D for both of which correlation destruction is not detected. In other words, correlation destruction is detected for the correlation exhibiting the highest detection sensitivity. Accordingly, the abnormality cause extraction unit 104 determines the metric A as the candidate for the abnormality cause.

The abnormality cause extraction unit 104 repeats the processing from step S102 to step S110 for all the metrics included in the correlation model 122 (step S111).

When the metric C is selected, for example, the abnormality cause extraction unit 104 obtains a detection sensitivity (=0.1) to the non-objective metric of the correlation function f(A, C) as illustrated in Fig. 5, in consideration that the metric C is the non-objective metric of the correlation function f(A, C). Further, the abnormality cause extraction unit 104 obtains a detection sensitivity (=0.12) to the objective metric of a correlation function f(C, D), in consideration that the metric C is the objective metric of the correlation function f(C, D).

In this case, the detection sensitivity (=0.1) of the correlation between the metrics A and C for which correlation detection is detected is lower than the detection sensitivity (=0.12) of the correlation between the metrics C and D for which correlation destruction is not detected. In other words, correlation destruction is not detected for the correlation exhibiting the highest detection sensitivity. Accordingly, the abnormality cause extraction unit 104 does not determine the metric C as a candidate for the abnormality cause.

Finally, the abnormality cause extraction unit 104 outputs the identifier of the metric determined as the candidate for the abnormality cause to an administrator or the like via an output unit (not illustrated) (step S112).

For example, the abnormality cause extraction unit 104 outputs the metric A as the candidate for the abnormality cause.

The operation according to the first exemplary embodiment of the present invention is completed by the processing above described.

Next, a characteristic configuration of the first exemplary embodiment of the present invention will be described. Fig. 1 is a block diagram illustrating the characteristic configuration according to the first exemplary embodiment of the present invention.

Referring to Fig. 1, a system analysis device 100 includes the correlation model storage unit 112 and the abnormality cause extraction unit 104.

The correlation model storage unit 112 stores a correlation model 122 indicating a correlation of a pair of metrics in a system.

The abnormality cause extraction unit 104 extracts a metric of candidate for an abnormality cause on the basis of a detection sensitivity calculated for each metric associated with a correlation for which correlation destruction is detected in correlations included in the correlation model 122. The detection sensitivity indicates a likelihood of occurrence of correlation destruction in each correlation associated with the metric at the time of abnormality of the metric.

According to the first exemplary embodiment of the present invention, an abnormality cause is accurately determined in invariant relation analysis. This is because the abnormality cause extraction unit 104, instead of extracting all metrics associated with a correlation for which correlation destruction is detected as candidates for the abnormality cause, narrows metrics of candidate for the abnormality cause. In other words, the abnormality cause extraction unit 104 narrows metrics of candidate for the abnormality cause on the basis of detection sensitivities calculated for respective metrics associated with the correlation for which the correlation destruction is detected. The detection sensitivity indicates a likelihood of occurrence of correlation destruction in a correlation associated with the metric at the time of abnormality of the metric.

(Second Exemplary Embodiment)

Next, a second exemplary embodiment according to the present invention is described.

The second exemplary embodiment according to the present invention is different from the first exemplary embodiment of the present invention in that a candidate for an abnormality cause is extracted by using a higher detection sensitivity in detection sensitivities of two correlation functions, when the two correlation functions are defined for a correlation of each pair of metrics.

The configuration of the system analysis device 100 according to the second exemplary embodiment of the present invention is similar to the configuration thereof according to the first exemplary embodiment of the present invention (Fig. 2).

Fig. 7 is a diagram illustrating an example of the correlation model 122 and detection sensitivities according to the second exemplary embodiment of the present invention. In case of the correlation model 122 in Fig. 7, two correlation functions are defined for each pair of metrics for predicting the metrics of the pair.

The abnormality cause extraction unit 104 extracts a metric of candidate for an abnormality cause by using a higher detection sensitivity in detection sensitivities of two correlation functions expressing each correlation.

Next, an operation of the system analysis device 100 according to the second exemplary embodiment according to the present invention is described.

Fig. 6 is a flowchart illustrating an operation of the system analysis device 100 according to the second exemplary embodiment of the present invention.

The operation according to the second exemplary embodiment of the present invention is similar to the operation according to the first exemplary embodiment except for obtaining processing of a detection sensitivity (steps S205 and S206 in Fig. 6) executed by the abnormality cause extraction unit 104.

It is assumed herein that the correlation model 122 illustrated in Fig. 7 is generated by the correlation model generation unit 102, and stored in the correlation model storage unit 112. It is also assumed that detection sensitivities illustrated in Fig. 7 is calculated by the abnormality cause extraction unit 104, and stored in the detection sensitivity storage unit 114.

Fig. 8 is a diagram illustrating an example of detection of correlation destruction and an example of comparison of detection sensitivities. In this case, correlation destruction is detected for each of two correlation functions with respect to a correlation of each pair of metrics.

For example the correlation destruction detection unit 103 detects correlation destruction illustrated in Fig. 8 for performance information newly collected.

The abnormality cause extraction unit 104 obtains a detection sensitivity to an objective metric of a correlation function which sets the selected metric as the objective metric in two correlation functions of the selected correlation. Further, the abnormality cause extraction unit 104 obtains a detection sensitivity to a non-objective metric of a correlation function which sets the selected metric as the non-objective metric (step S205). Then, the abnormality cause extraction unit 104 selects a set of the higher detection sensitivity in the detection sensitivities thus obtained, and a detection state of correlation destruction (step S206).

When the metric A is selected, for example, the abnormality cause extraction unit 104 obtains a detection sensitivity (=0.01) to the objective metric of the correlation function f(A, B), and a detection sensitivity (=0.011) to the non-objective metric of the correlation function f(B, A). Then, the abnormality cause extraction unit 104 selects the higher detection sensitivity (=0.011) and a detection state of correlation destruction (not detected), as illustrated in Fig. 8. Further, the abnormality cause extraction unit 104 selects a detection sensitivity (=0.051) to the objective metric of the correlation function f(A, C) and a detection state of correlation destruction (detected), and a detection sensitivity (=0.0012) to the objective metric of the correlation function f(A, D) and a detection state of correlation destruction (not detected).

In this case, the detection sensitivity (=0.051) of the correlation between the metrics A and C for which correlation destruction is detected is higher than the detection sensitivity (=0.01) of the correlation between the metrics A and B and the detection sensitivity (=0.0012) of the correlation between the metrics A and D for both of which correlation destruction is not detected. In other words, correlation destruction is detected for the correlation exhibiting the highest detection sensitivity. Accordingly, the abnormality cause extraction unit 104 determines the metric A as a candidate for the abnormality cause.

When the metric C is selected, the abnormality cause extraction unit 104 selects a detection sensitivity (=0.11) to the non-objective metric of the correlation function f(A, C) and a detection state of correlation destruction (detected), as illustrated in Fig. 8. Further, the abnormality cause extraction unit 104 selects a detection sensitivity (=0.12) to the objective metric of the correlation function f(C, D) and a detection state of correlation destruction (not detected).

In this case, the detection sensitivity (=0.11) of the correlation between the metrics A and C for which correlation destruction is detected is lower than the detection sensitivity (=0.12) of the correlation between the metrics C and D for which correlation destruction is not detected. In other words, correlation destruction is not detected for the correlation exhibiting the highest detection sensitivity. Accordingly, the abnormality cause extraction unit 104 does not determine the metric C as a candidate for the abnormality cause.

Then, the abnormality cause extraction unit 104 outputs the metric A as a candidate for the abnormality cause.

The operation according to the second exemplary embodiment of the present invention is completed by the processing above described.

According to the second exemplary embodiment of the present invention, an abnormality cause is more accurately determined than in the first exemplary embodiment of the present invention. This is because the abnormality cause extraction unit 104 extracts a metric of candidate for an abnormality cause by using a higher detection sensitivity in detection sensitivities of two correlation functions expressing each correlation.

For example, while a detection sensitivity of a correlation function is calculated by using Equation 3 and Equation 4 in the exemplary embodiments of the present invention, a detection sensitivity may be determined by other methods as long as a larger value is obtainable in accordance with a coefficient to be multiplied by a metric. For example, the abnormality cause extraction unit 104 may determine a detection sensitivity by using a conversion table of detection sensitivities in correspondence with coefficients. Alternatively, detection sensitivity may be determined by a method other than methods using coefficients as long as a likelihood of occurrence of correlation destruction at the time of abnormality of a metric is indicated.

While a metric is determined as a candidate for an abnormality cause when correlation destruction is detected for a correlation exhibiting the highest detection sensitivity, according to the exemplary embodiments of the present invention, a candidate for an abnormality cause may be determined by other methods as long as the candidate for the abnormality cause is extractable on the basis of a detection sensitivity. For example, the abnormality cause extraction unit 104 may determine a candidate for an abnormality cause, on the basis of scores which increase in accordance with a detection number of correlation destruction for a correlation function exhibiting a high detection sensitivity.

According to the exemplary embodiments of the present invention, as a monitored system, an IT system including a server device, a network device, or the like as the monitored device 200 is used. However, the monitored system may be other types of systems as long as a correlation model of the monitored system can be generated to determine an abnormality cause based on correlation destruction. For example, the monitored system may be a plant system, a structure, transportation equipment, or the like. In this case, the system analysis device 100, for example, generates the correlation model 122 for metrics corresponding to values of various types of sensors, and performs correlation destruction detection and extraction of a candidate for abnormality cause.

This application is based upon and claims the benefit of priority from Japanese Patent Application No. 2013-035784, filed on February 26, 2013,

[Industrial Applicability]

The present invention is applicable to invariant relation analysis for determining a cause of system abnormality or failure based on correlation destruction detected on a correlation model.

[Reference signs List]

| | |
|---|---|
| 100 | system analysis device |
| 101 | performance information collection unit |
| 102 | correlation model generation unit |
| 103 | correlation destruction detection unit |
| 104 | abnormality cause extraction unit |
| 111 | performance information storage unit |
| 112 | correlation model storage unit |
| 113 | correlation destruction storage unit |
| 114 | detection sensitivity storage unit |
| 122 | correlation model |
| 200 | monitored device |

## Claims

**1.** A system analysis device (100) comprising:

a correlation model storage means (112) for storing a correlation model (122) indicating a correlation of a pair of metrics in a system, the correlation of a pair of the metrics being expressed by a correlation function for predicting a value of one of the metrics of the pair by inputting measurements of time series of both the metrics or the other metrics of the pair into the correlation function; and

an abnormality cause extraction means (104) for extracting a metric of candidate for an abnormality cause by comparing detection sensitivities calculated for metrics associated with a correlation for which correlation destruction is detected in correlations included in the correlation model (122), the detection sensitivity of a metric indicating a degree of effect of an abnormality of the metric on a prediction value of a correlation function associated with the metric and being calculated based on a coefficient of the correlation function, the correlation destruction being detected if a difference between a prediction value of a metric obtained by the correlation function and a measurement of the metric is equal to or greater than a predetermined value.

**2.** The system analysis device according to Claim 1, wherein,
for each metric associated with the correlation for which the correlation destruction is detected, when the correlation destruction is detected in a correlation exhibiting the highest detection sensitivity in correlations associated with the metric, the abnormality cause extraction means (104) determines the metric as the candidate for the abnormality cause.

**3.** The system analysis device according to Claim 1 or 2, wherein
the detection sensitivity of the correlation to the metric associated with the correlation is determined so as to increase in accordance with a coefficient to be multiplied by the metric in the correlation function of the correlation.

**4.** The system analysis device according to Claim 3, wherein
the detection sensitivity of the correlation to the metric associated with the correlation is further determined so as to decrease in accordance with a threshold for a prediction error applied for determining correlation destruction by using the correlation function of the correlation.

**5.** The system analysis device according to Claim 3 or 4, wherein

a correlation of a pair of the metrics is expressed by two correlation functions predicting the one and the other of the pair, respectively, and
the abnormality cause extraction means (104)extracts the metric of candidate for the abnormality cause by using the higher detection sensitivity in detection sensitivities of two correlation functions expressing a correlation of each metric associated with the correlation for which the correlation destruction is detected.

**6.** A system analysis method comprising:

storing a correlation model (122) indicating a correlation of a pair of metrics in a system, the correlation of a pair of the metrics being expressed by a correlation function for predicting a value of one of the metrics of the pair by inputting measurements of time series of both the metrics or the other metrics of the pair into the correlation function; and
extracting a metric of candidate for an abnormality cause by comparing detection sensitivities calculated for metrics associated with a correlation for which correlation destruction is detected in correlations included in the correlation model (122), the detection sensitivity of a metric indicating a degree of effect of an abnormality of the metric on a prediction value of a correlation function associated with the metric and being calculated based on a coefficient of the correlation function, the correlation destruction being detected if a difference between a prediction value of a metric obtained by the correlation function and a measurement of the metric is equal to or greater than a predetermined value.

**7.** The system analysis method according to Claim 6, wherein,
when extracting a metric of candidate for an abnormality cause, for each metric associated with the correlation for which the correlation destruction is detected, when the correlation destruction is detected in a correlation exhibiting the highest detection sensitivity in correlations associated with the metric, determining the metric as the candidate for the abnormality cause.

**8.** The system analysis method according to Claim 6 or 7, wherein
the detection sensitivity of the correlation to the metric associated with the correlation is determined so as to increase in accordance with a coefficient to be multiplied by the metric in the correlation function of the correlation.

**9.** The system analysis method according to Claim 8, wherein
the detection sensitivity of the correlation to the metric associated with the correlation is further determined so as to decrease in accordance with a threshold for a prediction error applied for determining correlation destruction by using the correlation function of the correlation.

**10.** The system analysis method according to Claim 8 or 9, wherein
a correlation of a pair of the metrics is expressed by two correlation functions predicting the one and the other of the pair, respectively, and
when extracting a metric of candidate for an abnormality cause, extracting the metric of candidate for the abnormality cause by using the higher detection sensitivity in detection sensitivities of two correlation functions expressing a correlation of each metric associated with the correlation for which the correlation destruction is detected.

**11.** A computer readable storage medium recording thereon a program, causing a computer to perform a method comprising:

storing a correlation model (122) indicating a correlation of a pair of metrics in a system, the correlation of a pair of the metrics being expressed by a correlation function for predicting a value of one of the metrics of the pair by inputting measurements of time series of both the metrics or the other metrics of the pair into the correlation function; and
extracting a metric of candidate for an abnormality cause by comparing detection sensitivities calculated for metrics associated with a correlation for which correlation destruction is detected in correlations included in the correlation model (122), the detection sensitivity of a metric indicating a degree of effect of an abnormality of the metric on a prediction value of a correlation function associated with the metric and being calculated based on a coefficient of the correlation function, the correlation destruction being detected if a difference between a prediction value of a metric obtained by the correlation function and a measurement of the metric is equal to or greater than a predetermined value.

**12.** The computer readable storage medium recording thereon the program according to Claim 11, wherein,
when extracting a metric of candidate for an abnormality cause, for each metric associated with the correlation for which the correlation destruction is detected, when the correlation destruction is detected in a correlation exhibiting the highest detection sensitivity in correlations associated with the metric, determining the metric as the candidate for the abnormality cause.

**13.** The computer readable storage medium recording thereon the program according to Claim 11 or 12, wherein
the detection sensitivity of the correlation to the metric associated with the correlation is determined so as to increase in accordance with a coefficient to be multiplied by the metric in the correlation function of the correlation.

**14.** The computer readable storage medium recording thereon the program according to Claim 13, wherein
the detection sensitivity of the correlation to the metric associated with the correlation is further determined so as to decrease in accordance with a threshold for a prediction error applied for determining correlation destruction by using the correlation function of the correlation.

**15.** The computer readable storage medium recording thereon the program according to Claim 13 or 14, wherein
a correlation of a pair of the metrics is expressed by two correlation functions predicting the one and the other of the pair, respectively, and
when extracting a metric of candidate for an abnormality cause, extracting the metric of candidate for the abnormality cause by using the higher detection sensitivity in detection sensitivities of two correlation functions expressing a correlation of each metric associated with the correlation for which the correlation destruction is detected.

## Patentansprüche

**1.** Eine Systemanalysevorrichtung (100), umfassend

eine Korrelationsmodell-Speichereinrichtung (112) zum Speichern eines Korrelationsmodells (122), das eine Korrelation eines Paares von Metriken in einem System anzeigt, wobei die Korrelation eines Paares der Metriken durch eine Korrelationsfunktion zum Vorhersagen eines Wertes von einer der Metriken des Paares durch Eingeben von Messungen von Zeitreihen einer der Metriken des Paares oder beider Metriken des Paares in die Korrelationsfunktion ausgedrückt wird; und
eine Abnormalitätsursachen-Extraktionseinrichtung (104) zum Extrahieren einer Metrik, die ein Kandidat für eine Abnormalitätsursache ist, durch Vergleichen von Erkennungsempfindlichkeiten, die für Metriken berechnet werden, die mit einer Korrelation verbunden sind, für die Korrelationszerstörung in Korrelationen erkannt wird, die in dem Korrelationsmodell (122) enthalten sind, wobei die Erkennungsempfindlichkeit einer Metrik einen Grad der Auswirkung einer Abnormalität der Metrik auf einen Vorhersagewert einer Korrelationsfunktion, die mit der Metrik verbunden ist, anzeigt und auf der Grundlage eines Koeffizienten der Korrelationsfunktion berechnet wird, wobei die Korrelationszerstörung erkannt wird, wenn eine Differenz zwischen einem Vorhersagewert einer Metrik, der durch die Korrelationsfunktion erhalten wird, und einer Messung der Metrik gleich oder größer als ein vorbestimmter Wert ist.

**2.** Systemanalysevorrichtung nach Anspruch 1, wobei,
für jede Metrik, die mit der Korrelation assoziiert ist, für die die Korrelationszerstörung detektiert wird, wenn die Korrelationszerstörung in einer Korrelation detektiert wird, die die höchste Detektionsempfindlichkeit in Korrelationen aufweist, die mit der Metrik assoziiert sind, die Abnormalitätsursachen-Extraktionseinrichtung (104) die Metrik als den Kandidaten für die Abnormalitätsursache bestimmt.

**3.** Die Systemanalysevorrichtung nach Anspruch 1 oder 2, wobei die Erkennungsempfindlichkeit der Korrelation für die mit der Korrelation assoziierte Metrik so bestimmt wird, dass sie in Abhängigkeit von einem mit der Metrik zu multiplizierenden Koeffizienten in der Korrelationsfunktion der Korrelation zunimmt.

**4.** Systemanalysevorrichtung nach Anspruch 3, wobei die Erkennungsempfindlichkeit der Korrelation für die der Korrelation zugeordnete Metrik ferner so bestimmt wird, dass sie in Übereinstimmung mit einem Schwellenwert für einen Vorhersagefehler abnimmt, der für die Bestimmung der Korrelationszerstörung unter Verwendung der Korrelationsfunktion der Korrelation angewendet wird.

**5.** Systemanalysevorrichtung nach Anspruch 3 oder 4, wobei

eine Korrelation eines Paares der Metriken durch zwei Korrelationsfunktionen ausgedrückt wird, die jeweils das eine und das andere des Paares vorhersagen, und

die Abnormalitätsursachen-Extraktionseinrichtung (104) die Metrik des Kandidaten für die Abnormalitätsursache extrahiert, indem sie die höhere Erfassungsempfindlichkeit in den Erfassungsempfindlichkeiten von zwei Korrelationsfunktionen verwendet, die eine Korrelation jeder Metrik ausdrücken, die mit der Korrelation verbunden ist, für die die Korrelationszerstörung erfasst wird.

**6.** Systemanalyseverfahren, umfassend

Speichern eines Korrelationsmodells (122), das eine Korrelation eines Paares von Metriken in einem System anzeigt, wobei die Korrelation eines Paares der Metriken durch eine Korrelationsfunktion zum Vorhersagen eines Wertes einer der Metriken des Paares durch Eingeben von Messungen von Zeitreihen sowohl der Metriken als auch der anderen Metriken des Paares in die Korrelationsfunktion ausgedrückt wird; und

Extrahieren einer Metrik, die ein Kandidat für eine Abnormalitätsursache ist, durch Vergleichen von Erkennungsempfindlichkeiten, die für Metriken berechnet wurden, die mit einer Korrelation verbunden sind, für die Korrelationszerstörung in Korrelationen erkannt wird, die in dem Korrelationsmodell (122) enthalten sind, wobei die Erkennungsempfindlichkeit einer Metrik einen Grad der Auswirkung einer Abnormalität der Metrik auf einen Vorhersagewert einer Korrelationsfunktion, die mit der Metrik verbunden ist, anzeigt und auf der Grundlage eines Koeffizienten der Korrelationsfunktion berechnet wird, wobei die Korrelationszerstörung erkannt wird, wenn eine Differenz zwischen einem Vorhersagewert einer Metrik, der durch die Korrelationsfunktion erhalten wird, und einer Messung der Metrik gleich oder größer als ein vorbestimmter Wert ist.

**7.** Systemanalyseverfahren nach Anspruch 6, wobei, beim Extrahieren einer Metrik als Kandidat für eine Abnormalitätsursache für jede Metrik, die mit der Korrelation assoziiert ist, für die die Korrelationszerstörung detektiert wird, wenn die Korrelationszerstörung in einer Korrelation detektiert wird, die die höchste Detektionsempfindlichkeit in den mit der Metrik assoziierten Korrelationen aufweist, Bestimmen der Metrik als Kandidat für die Abnormalitätsursache.

**8.** Systemanalyseverfahren nach Anspruch 6 oder 7, wobei die Erkennungsempfindlichkeit der Korrelation für die mit der Korrelation assoziierte Metrik so bestimmt wird, dass sie in Abhängigkeit von einem mit der Metrik zu multiplizierenden Koeffizienten in der Korrelationsfunktion der Korrelation zunimmt.

**9.** Systemanalyseverfahren nach Anspruch 8, wobei die Erkennungsempfindlichkeit der Korrelation für die der Korrelation zugeordnete Metrik ferner so bestimmt wird, dass sie in Übereinstimmung mit einem Schwellenwert für einen Vorhersagefehler abnimmt, der für die Bestimmung der Korrelationszerstörung unter Verwendung der Korrelationsfunktion der Korrelation angewendet wird.

**10.** Systemanalyseverfahren nach Anspruch 8 oder 9, wobei

eine Korrelation eines Paares der Metriken durch zwei Korrelationsfunktionen ausgedrückt wird, die jeweils die eine und die andere des Paares vorhersagen, und

wenn eine Metrik eines Kandidaten für eine Abnormalitätsursache extrahiert wird, Extrahieren der Metrik des Kandidaten für die Abnormalitätsursache durch Verwendung der höheren Erfassungsempfindlichkeit in den Erfassungsempfindlichkeiten von zwei Korrelationsfunktionen, die eine Korrelation jeder Metrik ausdrücken, die mit der Korrelation verbunden ist, für die die Korrelationszerstörung erfasst wird.

**11.** Computerlesbares Speichermedium, auf dem ein Programm aufgezeichnet ist, das einen Computer veranlasst, ein Verfahren durchzuführen, das Folgendes umfasst

Speichern eines Korrelationsmodells (122), das eine Korrelation eines Paares von Metriken in einem System anzeigt, wobei die Korrelation eines Paares der Metriken durch eine Korrelationsfunktion zum Vorhersagen eines Wertes einer der Metriken des Paares durch Eingeben von Messungen von Zeitreihen sowohl der Metriken als auch der anderen Metrik des Paares in die Korrelationsfunktion ausgedrückt wird; und

Extrahieren einer Metrik, die ein Kandidat für eine Abnormalitätsursache ist, durch Vergleichen von Erkennungsempfindlichkeiten, die für Metriken berechnet wurden, die mit einer Korrelation assoziiert sind, für die Korrelationszerstörung in Korrelationen erkannt wird, die in dem Korrelationsmodell (122) enthalten sind, wobei die Erkennungsempfindlichkeit einer Metrik einen Grad der Auswirkung einer Abnormalität der Metrik auf einen Vorhersagewert einer Korrelationsfunktion, die mit der Metrik assoziiert ist, anzeigt und basierend auf einem Koeffizienten der Korrelationsfunktion berechnet wird, wobei die Korrelationszerstörung erkannt wird, wenn eine Differenz zwischen einem Vorhersagewert einer Metrik, die durch die Korrelationsfunktion erhalten wird, und einer Messung der Metrik gleich oder größer als ein vorbestimmter Wert ist.

**12.** Computerlesbares Speichermedium, auf dem das Programm nach Anspruch 11 aufgezeichnet ist, wobei, beim Extrahieren einer Metrik als Kandidat für eine Abnormalitätsursache für jede Metrik, die mit der Korrelation assoziiert ist, für die die Korrelationszerstörung detektiert wird, wenn die Korrelationszerstörung in einer Korrelation detektiert wird, die die höchste Detektionsempfindlichkeit in den mit der Metrik assoziierten Korrelationen aufweist, Bestimmen der Metrik als Kandidat für die Abnormalitätsursache.

**13.** Computerlesbares Speichermedium, auf dem das Programm nach Anspruch 11 oder 12 aufgezeichnet ist, wobei die Erkennungsempfindlichkeit der Korrelation für die mit der Korrelation assoziierte Metrik so bestimmt wird, dass sie entsprechend einem mit der Metrik zu multiplizierenden Koeffizienten in der Korrelationsfunktion der Korrelation zunimmt.

**14.** Computerlesbares Speichermedium, auf dem das Programm nach Anspruch 13 aufgezeichnet ist, wobei die Erkennungsempfindlichkeit der Korrelation für die der Korrelation zugeordnete Metrik ferner so bestimmt wird, dass sie in Übereinstimmung mit einem Schwellenwert für einen Vorhersagefehler abnimmt, der für die Bestimmung der Korrelationszerstörung unter Verwendung der Korrelationsfunktion der Korrelation angewendet wird.

**15.** Computerlesbares Speichermedium, auf dem das Programm nach Anspruch 13 oder 14 aufgezeichnet ist, wobei

eine Korrelation eines Paares der Metriken durch zwei Korrelationsfunktionen ausgedrückt wird, die jeweils die eine und die andere des Paares vorhersagen, und

wenn eine Metrik eines Kandidaten für eine Abnormalitätsursache extrahiert wird, Extrahieren der Metrik des Kandidaten für die Abnormalitätsursache durch Verwendung der höheren Erfassungsempfindlichkeit in den Erfassungsempfindlichkeiten von zwei Korrelationsfunktionen, die eine Korrelation jeder Metrik ausdrücken, die mit der Korrelation verbunden ist, für die die Korrelationszerstörung erfasst wird.

## Revendications

**1.** Dispositif d’analyse de système (100) comprenant :

un moyen de stockage de modèle de corrélation (112) pour stocker un modèle de corrélation (122) indiquant une corrélation d’une paire de métriques dans un système, la corrélation d’une paire des métriques étant exprimée par une fonction de corrélation pour prédire une valeur de l’une des métriques de la paire en entrant des mesures de séries temporelles de chacune parmi l’une ou l’autre métrique de la paire, en la fonction de corrélation ; et

un moyen d’extraction de cause d’anomalie (104) pour extraire une métrique d’un candidat pour une cause d’anomalie en comparant des sensibilités de détection calculées pour des métriques associées à une corrélation pour laquelle une destruction de corrélation est détectée dans des corrélations incluses dans le modèle de corrélation (122), la sensibilité de détection d'une métrique indiquant un degré d'effet d'une anomalie de la métrique sur une valeur de prédiction d'une fonction de corrélation associée à la métrique et étant calculée sur la base d'un coefficient de la fonction de corrélation, la destruction de corrélation étant détectée si une différence entre une valeur de prédiction d'une métrique obtenue par la fonction de corrélation et une mesure de la métrique est égale ou supérieure à une valeur prédéterminée.

**2.** Dispositif d'analyse de système selon la revendication 1, dans lequel,
pour chaque métrique associée à la corrélation pour laquelle la destruction de corrélation est détectée, lorsque la destruction de corrélation est détectée dans une corrélation présentant la sensibilité de détection la plus grande parmi les corrélations associées à la métrique, le moyen d'extraction de cause d'anomalie (104) détermine la métrique comme étant le candidat pour la cause d'anomalie.

**3.** Dispositif d'analyse de système selon la revendication 1 ou 2, dans lequel
la sensibilité de détection de la corrélation à la métrique associée à la corrélation est déterminée de manière à augmenter suivant un coefficient à multiplier par la métrique dans la fonction de corrélation de la corrélation.

**4.** Dispositif d'analyse de système selon la revendication 3, dans lequel
la sensibilité de détection de la corrélation à la métrique associée à la corrélation est en outre déterminée de manière à diminuer suivant un seuil pour une erreur de prédiction appliqué pour déterminer une destruction de corrélation en utilisant la fonction de corrélation de la corrélation.

**5.** Dispositif d'analyse de système selon la revendication 3 ou 4, dans lequel
une corrélation d'une paire des métriques est exprimée par deux fonctions de corrélation prédisant l'une ou l'autre de la paire, respectivement, et
le moyen d'extraction de cause d'anomalie (104) extrait la métrique d'un candidat pour la cause d'anomalie en utilisant la plus grande sensibilité de détection parmi les sensibilités de détection de deux fonctions de corrélation exprimant une corrélation de chaque métrique associée à la corrélation pour laquelle la destruction de corrélation est détectée.

**6.** Procédé d'analyse de système comprenant :

le stockage d'un modèle de corrélation (122) indiquant une corrélation d'une paire de métriques dans un système, la corrélation d'une paire des métriques étant exprimée par une fonction de corrélation pour prédire une valeur de l'une des métriques de la paire en entrant des mesures de séries temporelles de chacune parmi l'une ou l'autre métrique de la paire, en la fonction de corrélation ; et
l'extraction d'une métrique d'un candidat pour une cause d'anomalie en comparant des sensibilités de détection calculées pour des métriques associées à une corrélation pour laquelle une destruction de corrélation est détectée dans des corrélations incluses dans le modèle de corrélation (122), la sensibilité de détection d'une métrique indiquant un degré d'effet d'une anomalie de la métrique sur une valeur de prédiction d'une fonction de corrélation associée à la métrique et étant calculée sur la base d'un coefficient de la fonction de corrélation, la destruction de corrélation étant détectée si une différence entre une valeur de prédiction d'une métrique obtenue par la fonction de corrélation et une mesure de la métrique est égale ou supérieure à une valeur prédéterminée.

**7.** Procédé d'analyse de système selon la revendication 6, dans lequel,
lors de l'extraction d'une métrique d'un candidat pour une cause d'anomalie, pour chaque métrique associée à la corrélation pour laquelle la destruction de corrélation est détectée, lorsque la destruction de corrélation est détectée dans une corrélation présentant la sensibilité de détection la plus grande parmi les corrélations associées à la métrique, la métrique est déterminée comme étant le candidat pour la cause d'anomalie.

**8.** Procédé d'analyse de système selon la revendication 6 ou 7, dans lequel
la sensibilité de détection de la corrélation à la métrique associée à la corrélation est déterminée de manière à augmenter suivant un coefficient à multiplier par la métrique dans la fonction de corrélation de la corrélation.

**9.** Procédé d'analyse de système selon la revendication 8, dans lequel
la sensibilité de détection de la corrélation à la métrique associée à la corrélation est en outre déterminée de manière à diminuer suivant un seuil pour une erreur de prédiction appliqué pour déterminer une destruction de corrélation en utilisant la fonction de corrélation de la corrélation.

**10.** Procédé d'analyse de système selon la revendication 8 ou 9, dans lequel
une corrélation d'une paire des métriques est exprimée par deux fonctions de corrélation prédisant l'une ou l'autre de la paire, respectivement, et
lors de l'extraction d'une métrique d'un candidat pour une cause d'anomalie, la métrique d'un candidat pour la cause d'anomalie est extraite, en utilisant la plus grande sensibilité de détection parmi les sensibilités de détection de deux fonctions de corrélation exprimant une corrélation de chaque métrique associée à la corrélation pour laquelle la destruction de corrélation est détectée.

**11.** Support de stockage lisible par ordinateur sur lequel est enregistré un programme, amenant un ordinateur à effectuer un procédé comprenant :

le stockage d'un modèle de corrélation (122) indiquant une corrélation d'une paire de métriques dans un système, la corrélation d'une paire des métriques étant exprimée par une fonction de corrélation pour prédire une valeur de l'une des métriques de la paire en entrant des mesures de séries temporelles de chacune parmi l'une ou l'autre métrique de la paire, en la fonction de corrélation ; et
l'extraction d'une métrique d'un candidat pour une cause d'anomalie en comparant des sensibilités de détection calculées pour des métriques associées à une corrélation pour laquelle une destruction de corrélation est détectée dans les corrélations incluses dans le modèle de corrélation (122), la sensibilité de détection d'une métrique indiquant un degré d'effet d'une anomalie de la métrique sur une valeur de prédiction d'une fonction de corrélation associée à la métrique et étant calculée sur la base d'un coefficient de la fonction de corrélation, la destruction de corrélation étant détectée si une différence entre une valeur de prédiction d'une métrique obtenue par la fonction de corrélation et une mesure de la métrique est égale ou supérieure à une valeur prédéterminée.

**12.** Support de stockage lisible par ordinateur sur lequel est enregistré le programme selon la revendication 11, dans lequel,
lors de l'extraction d'une métrique d'un candidat pour une cause d'anomalie, pour chaque métrique associée à la corrélation pour laquelle la destruction de corrélation est détectée, lorsque la destruction de corrélation est détectée dans une corrélation présentant la sensibilité de détection la plus grande parmi les corrélations associées à la métrique, la métrique est déterminée comme étant le candidat pour la cause d'anomalie.

**13.** Support de stockage lisible par ordinateur sur lequel est enregistré le programme selon la revendication 11 ou 12, dans lequel
la sensibilité de détection de la corrélation à la métrique associée à la corrélation est déterminée de manière à augmenter suivant un coefficient à multiplier par la métrique dans la fonction de corrélation de la corrélation.

**14.** Support de stockage lisible par ordinateur sur lequel est enregistré le programme selon la revendication 13, dans lequel
la sensibilité de détection de la corrélation à la métrique associée à la corrélation est en outre déterminée de manière à diminuer suivant un seuil pour une erreur de prédiction appliqué pour déterminer une destruction de corrélation en utilisant la fonction de corrélation de la corrélation.

**15.** Support de stockage lisible par ordinateur sur lequel est enregistré le programme selon la revendication 13 ou 14, dans lequel
une corrélation d'une paire des métriques est exprimée par deux fonctions de corrélation prédisant l'une et l'autre de la paire, respectivement, et
lors de l'extraction d'une métrique d'un candidat pour une cause d'anomalie, la métrique d'un candidat pour la cause d'anomalie est extraite en utilisant la plus grande sensibilité de détection parmi les sensibilités de détection de deux fonctions de corrélation exprimant une corrélation de chaque métrique associée à la corrélation pour laquelle la destruction de corrélation est détectée.

Fig. 1

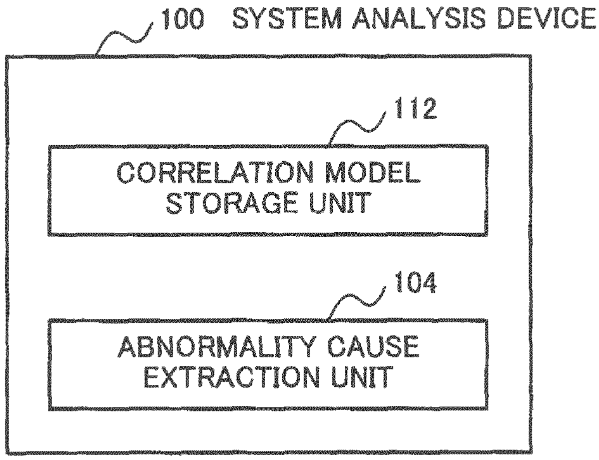
100 SYSTEM ANALYSIS DEVICE
112
CORRELATION MODEL STORAGE UNIT
104
ABNORMALITY CAUSE EXTRACTION UNIT

Fig. 2

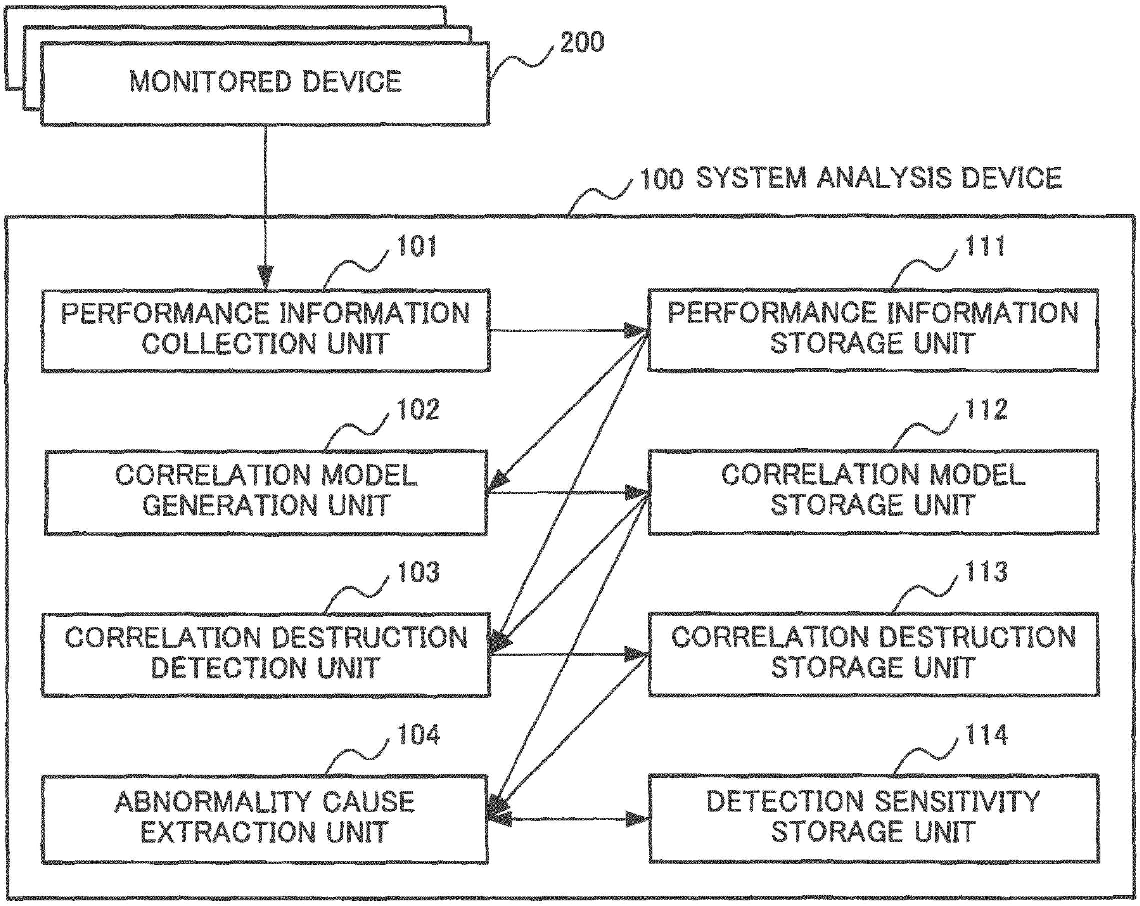
MONITORED DEVICE
200
100 SYSTEM ANALYSIS DEVICE
101
PERFORMANCE INFORMATION COLLECTION UNIT
111
PERFORMANCE INFORMATION STORAGE UNIT
102
CORRELATION MODEL GENERATION UNIT
112
CORRELATION MODEL STORAGE UNIT
103
CORRELATION DESTRUCTION DETECTION UNIT
113
CORRELATION DESTRUCTION STORAGE UNIT
104
ABNORMALITY CAUSE EXTRACTION UNIT
114
DETECTION SENSITIVITY STORAGE UNIT

Fig. 3

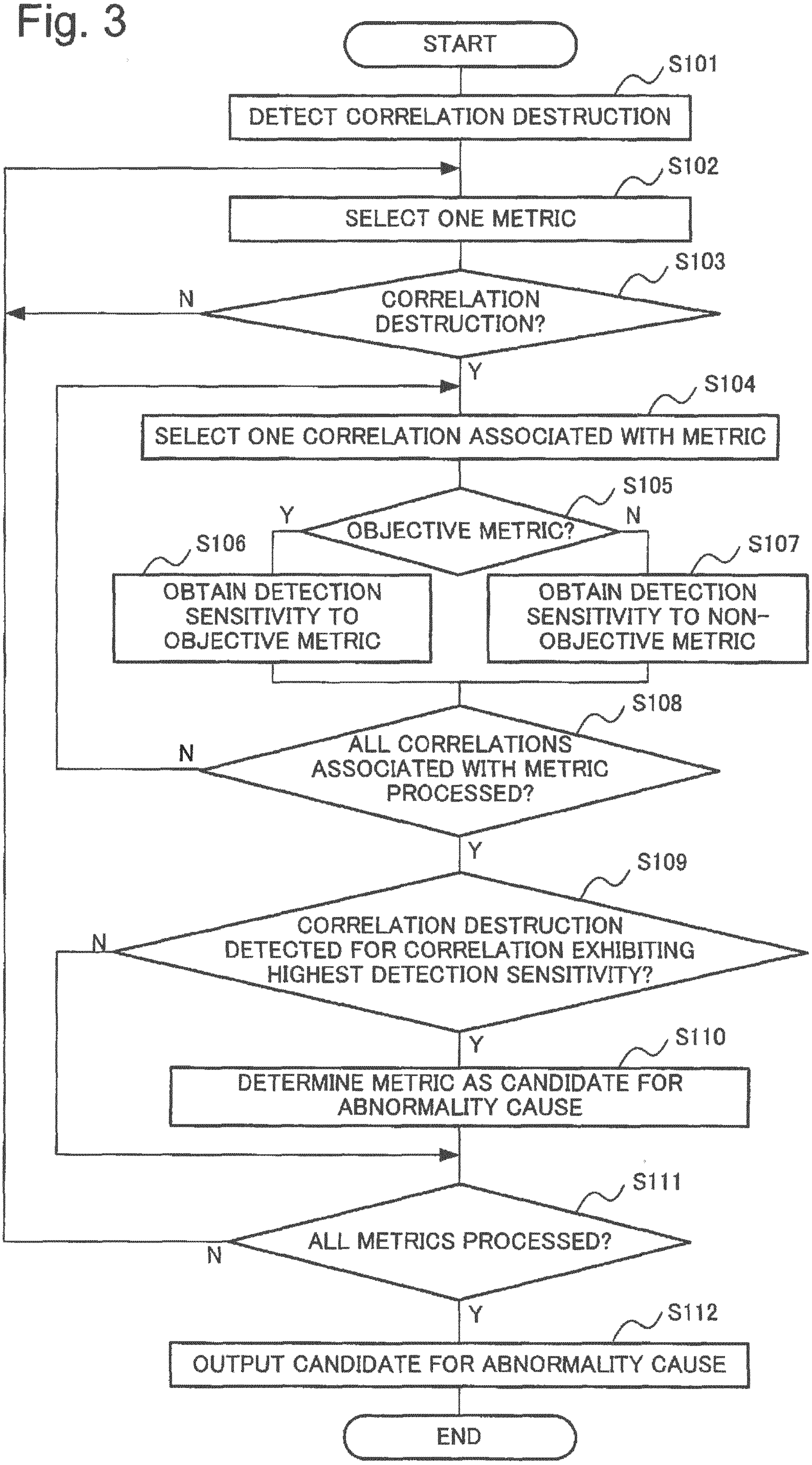
START
S101
DETECT CORRELATION DESTRUCTION
S102
SELECT ONE METRIC
S103
CORRELATION DESTRUCTION?
N
Y
S104
SELECT ONE CORRELATION ASSOCIATED WITH METRIC
S105
OBJECTIVE METRIC?
Y
N
S106
OBTAIN DETECTION SENSITIVITY TO OBJECTIVE METRIC
S107
OBTAIN DETECTION SENSITIVITY TO NON-OBJECTIVE METRIC
S108
ALL CORRELATIONS ASSOCIATED WITH METRIC PROCESSED?
N
Y
S109
CORRELATION DESTRUCTION DETECTED FOR CORRELATION EXHIBITING HIGHEST DETECTION SENSITIVITY?
N
Y
S110
DETERMINE METRIC AS CANDIDATE FOR ABNORMALITY CAUSE
S111
ALL METRICS PROCESSED?
N
Y
S112
OUTPUT CANDIDATE FOR ABNORMALITY CAUSE
END

Fig. 4

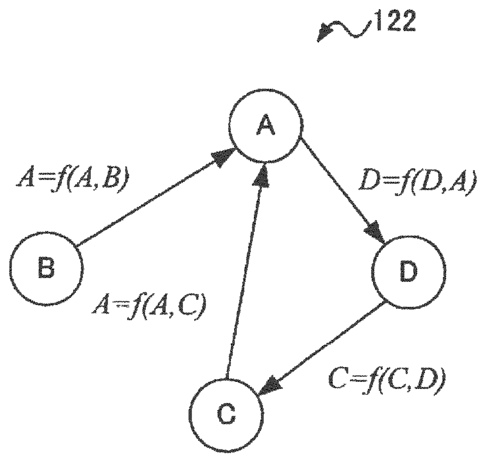


| CORRELATION FUNCTION | DETECTION SENSITIVITY TO OBJECTIVE METRIC | DETECTION SENSITIVITY TO NON-OBJECTIVE METRIC |
|---|---|---|
| $A=f(A,B)$ | 0.01 | 0.02 |
| $A=f(A,C)$ | 0.05 | 0.1 |
| $D=f(D,A)$ | 0.01 | 0.001 |
| $C=f(C,D)$ | 0.12 | 0.05 |

Fig. 5

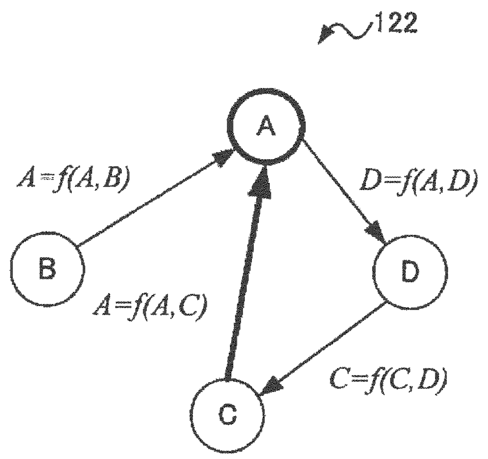


| METRIC | CORRELATION FUNCTION | CORRELATION DESTRUCTION | DETECTION SENSITIVITY |
|---|---|---|---|
| A | $A=f(A,B)$ | no | 0.01 |
| | $\underline{A=f(A,C)}$ | <u>yes</u> | <u>0.05</u> |
| | $D=f(D,A)$ | no | 0.001 |
| C | $A=f(A,C)$ | yes | 0.1 |
| | $C=f(C,D)$ | no | 0.12 |

→ CORRELATION DESTRUCTION NOT DETECTED

➡ CORRELATION DESTRUCTION DETECTED

○ ABNORMALITY CAUSE METRIC

Fig. 6

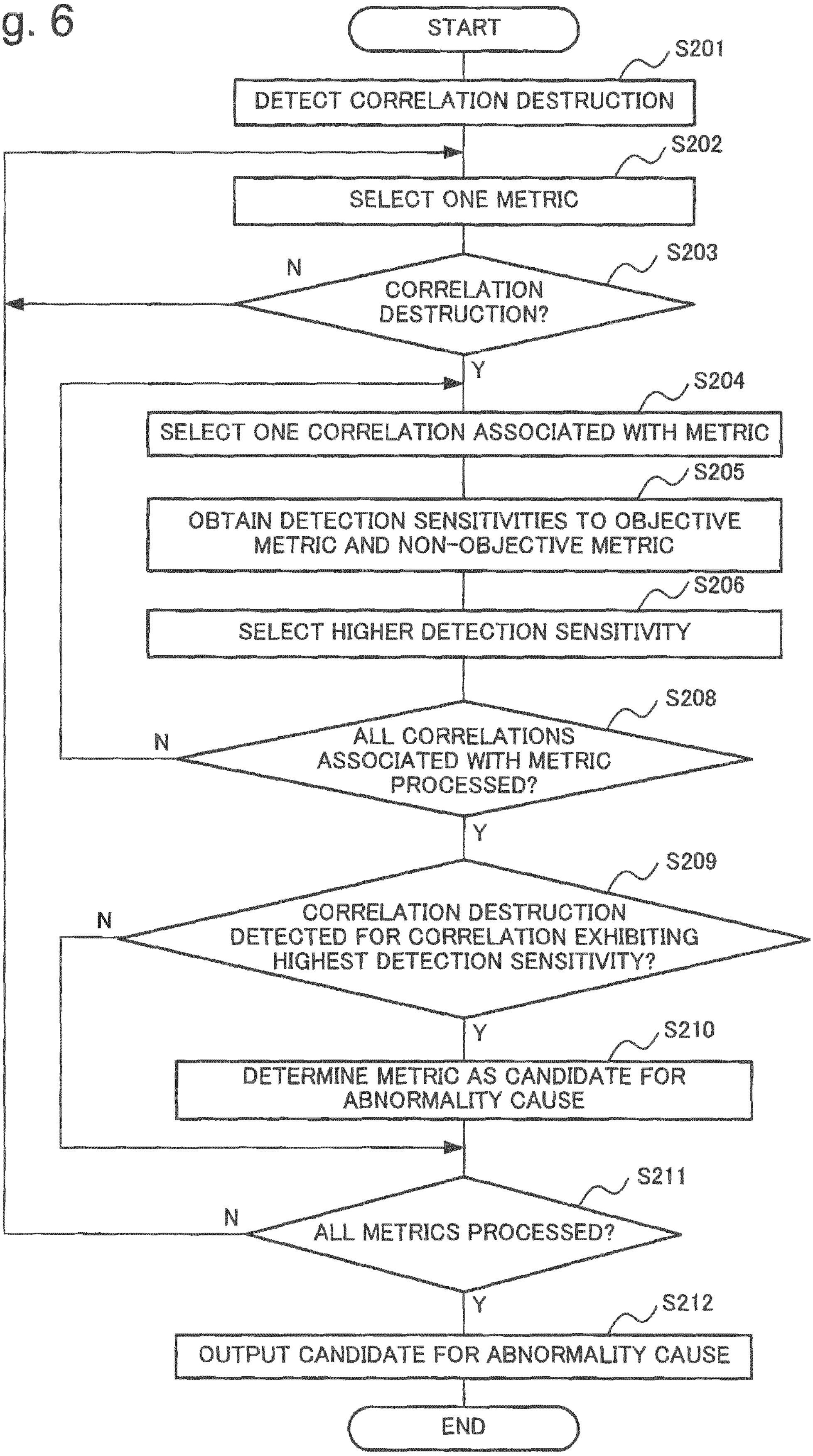
START
S201
DETECT CORRELATION DESTRUCTION
S202
SELECT ONE METRIC
S203
CORRELATION DESTRUCTION?
N
Y
S204
SELECT ONE CORRELATION ASSOCIATED WITH METRIC
S205
OBTAIN DETECTION SENSITIVITIES TO OBJECTIVE METRIC AND NON-OBJECTIVE METRIC
S206
SELECT HIGHER DETECTION SENSITIVITY
S208
ALL CORRELATIONS ASSOCIATED WITH METRIC PROCESSED?
N
Y
S209
CORRELATION DESTRUCTION DETECTED FOR CORRELATION EXHIBITING HIGHEST DETECTION SENSITIVITY?
N
Y
S210
DETERMINE METRIC AS CANDIDATE FOR ABNORMALITY CAUSE
S211
ALL METRICS PROCESSED?
N
Y
S212
OUTPUT CANDIDATE FOR ABNORMALITY CAUSE
END

Fig. 7

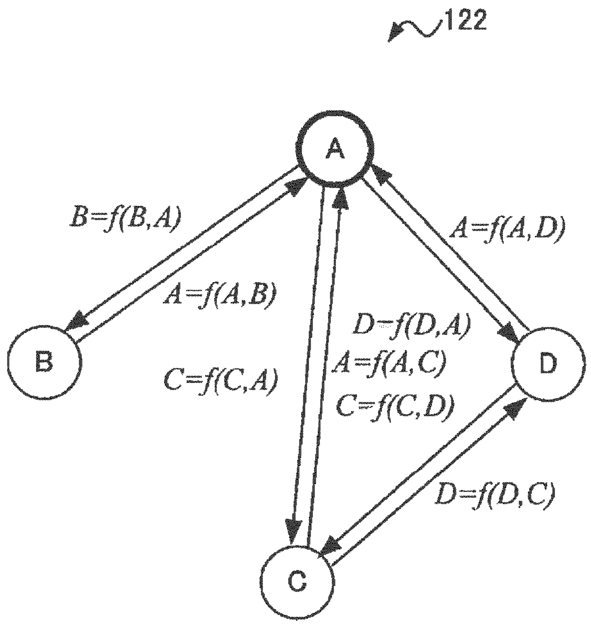


| CORRELATION FUNCTION | DETECTION SENSITIVITY TO OBJECTIVE METRIC | DETECTION SENSITIVITY TO NON-OBJECTIVE METRIC |
|---|---|---|
| A=f(A,B) | 0.01 | 0.02 |
| B=f(B,A) | 0.019 | 0.011 |
| A=f(A,C) | 0.051 | 0.11 |
| C=f(C,A) | 0.1 | 0.05 |
| D=f(D,A) | 0.02 | 0.001 |
| A=f(A,D) | 0.0012 | 0.01 |
| C=f(C,D) | 0.12 | 0.05 |
| D=f(D,C) | 0.05 | 0.12 |

Fig. 8

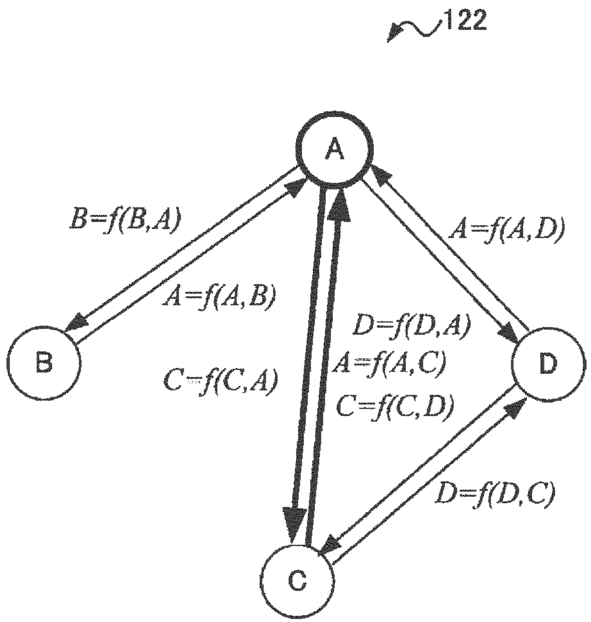


| METRIC | CORRELATION FUNCTION | CORRELATION DESTRUCTION | DETECTION SENSITIVITY |
|---|---|---|---|
| A | $B=f(B,A)$ | no | 0.011 |
| | <u>$A=f(A,C)$</u> | <u>yes</u> | <u>0.051</u> |
| | $A=f(A,D)$ | no | 0.0012 |
| C | $A=f(A,C)$ | yes | 0.11 |
| | $C=f(C,D)$ | no | 0.12 |

Fig. 9

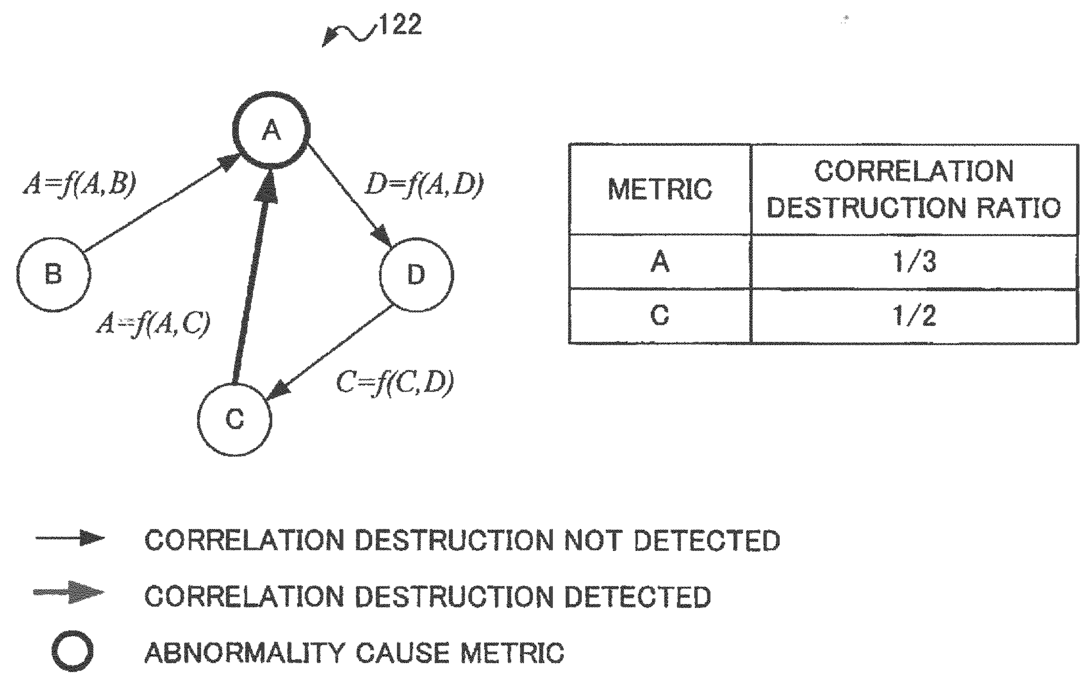


| METRIC | CORRELATION DESTRUCTION RATIO |
|---|---|
| A | 1/3 |
| C | 1/2 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010050023 A1
- US 2012254414 A1
- JP 2006135412 A
- JP 2013035784 A